# EUROPEAN PATENT APPLICATION

(11) **EP 2 624 545 A2**
(43) Date of publication of application: **07.08.2013**
(21) Application number: 12196660.0
(22) Date of filing: 12.12.2012
(51) Int. Cl.: H04N 7/15, H04N 7/14

(54) **Method and apparatus for controlling video device and video system**

(30) Priority: 06.02.2012 CN 201210025289
(71) Applicant: Huawei Technologies Co., Ltd., Longgang District, Shenzhen Guangdong 518129 (CN)
(72) Inventor: Ling, Weijun, 518129 Shenzhen (CN)
(74) Representative: Thun, Clemens

(57) **Abstract**

Embodiments of the present invention disclose a method and an apparatus for controlling a video device as well as a video system. The video device includes a monitor and a camera that are relatively fixed, face a same direction, and are connected to a moving mechanism. The method includes: obtaining a facial image of a participant that is identified from a conference site image, where the conference site image is shot and provided by the camera; analyzing the facial image, and, after determining, with reference to an analysis result, that a facial position of the participant has deviated from directions of facing the monitor and the camera, determining a deviation direction; and controlling the moving mechanism to drive the monitor and the camera to move to a position of facing the facial position of the participant according to the deviation direction.

## Description

### FIELD OF TECHNOLOGY

The present invention relates to the field of video communications technologies, and in particular to a method and an apparatus for controlling a video device and a video system having the apparatus.

### BACKGROUND

A video system is a new generation interactive multimedia communications system that integrates video, audio, and data communications. As a value-added service based on a communications network, it provides a virtual conference room for participants at different locations, so that they can have a "face to face" conference just like in a same room. To effectively reduce operating costs, more and more enterprises and government agencies choose video conferences to replace inter-city and inter-country business trips.

In the prior art, a conference site environment is typically designed according to a mode in which participants attend a conference (a general mode is that each participant takes a seat when attending a conference, which is referred to as attending mode), where the conference site environment includes participants' seats and positions of various video devices (including monitors and cameras). In general, on one hand, a conference site environment is not changed in order to reduce the configuration workload of the conference site environment and avoid increasing workload due to frequent changes to the conference site environment. On the other hand, the attending mode is flexible and can be changed so that the participants can attend a conference easily. In this way, the habits of different participants can be met; for example, some participants are used to taking a seat when attending a conference, while others are used to standing when attending a conference. In addition, the conference requirements of the participants can be met; for example, in a technical seminar, participants may need to present a technical topic, in which case the attending mode needs to be changed. However, these two requirements are in conflict in the prior art: because a conference site environment is configured based on an attending mode, they are somewhat bound; this means that if the attending mode needs to be flexibly changed to meet the conference requirements of the participants, the conference environment needs to be reconfigured, and that if the environment configuration remains unchanged, the conference requirements of the participants cannot be met.

### SUMMARY

Embodiments of the present invention provide a method and an apparatus for controlling a video device and a video system having the apparatus, with which directions of a camera and a monitor can be adjusted when a position of a participant changes so that participants are "face to face". This flexibly meets multiple attending modes of the participants without changing the conference site environment.

The embodiments of the present invention are implemented as follows:
In one aspect, an embodiment of the present invention provides a method for controlling a video device, where the video device includes a monitor and a camera, and the monitor and the camera are relatively fixed, face a same direction, and are connected to a moving mechanism. The method includes:
obtaining a facial image of a participant that is identified from a conference site image, where the conference site image is shot and provided by the camera;
analyzing the facial image, and determining a deviation direction, after judging, with reference to the analysis result, that a facial position of the participant has deviated from directions of facing the monitor and the camera; and
controlling the moving mechanism to drive the monitor and the camera to move to a position of facing the facial position of the participant according to the deviation direction.

In another aspect, an embodiment of the present invention further provides an apparatus for controlling a video device, where the video device includes a monitor and a camera, and the monitor and the camera are relatively fixed, face a same direction, and are connected to a moving mechanism. The apparatus for controlling a video device includes:
an obtaining unit, configured to obtain a facial image of a participant that is identified from a conference site image, where the conference site image is shot and provided by the camera;
an analyzing unit, configured to analyze the facial image;
a judging unit, configured to judge, with reference to an analysis result of the analyzing unit, whether a facial position of the participant has deviated from directions of facing the monitor and the camera, and, after determining that the facial position of the participant has deviated from directions of facing the monitor and the camera, determine a deviation direction; and
a control unit, configured to control the moving mechanism to drive the monitor and the camera to move to a position of facing the facial position of the participant according to the deviation direction.

In another aspect, an embodiment of the present invention further provides a video system, including a video device and a central control unit, where the video device includes a monitor and a camera, and the monitor and the camera are relatively fixed, face a same direction, and are connected to a moving mechanism. The system further includes:
a face identification engine that obtains a conference site image provided by the camera and identifies a facial image of a participant.

The central control unit is configured to obtain the facial image from the face identification engine, analyze the facial image, determine a deviation direction after judging, with reference to the analysis result, that a facial position of the participant has deviated from directions of facing the monitor and the camera, and control the moving mechanism to drive the monitor and the camera to move to a position of facing the facial position of the participant according to the deviation direction.

As seen from the preceding technical solution, compared with the prior art, the embodiments of the present invention arrange a monitor and a camera on a moving mechanism with relatively fixed positions (linked), and, after identifying a facial position of a participant from a conference site image shot by a camera and determining that the facial direction of the participant has changed, control a moving mechanism to move the monitor and the camera, to ensure that the monitor and the camera face the participant. In this way, the front image of the participant can be shot, and the participant can view a picture on the monitor horizontally, thereby ensuring that participants are "face to face horizontally". This accommodates attending modes of the participant while keeping the conference site environment unchanged.

### BRIEF DESCRIPTION OF THE DRAWINGS

To illustrate the technical solutions in the embodiments of the present invention or in the prior art more clearly, the following briefly describes the accompanying drawings needed for describing the embodiments or the prior art. Apparently, the accompanying drawings in the following description merely show some embodiments of the present invention, and persons skilled in the art can derive other drawings from these accompanying drawings without creative efforts.
FIG. 1 is a flowchart of a method for controlling a video device according to an embodiment of the present invention;
FIG. 2 is a schematic diagram of a conference site environment;
FIG. 3 is a flowchart of another method for controlling a video device according to an embodiment of the present invention;
FIG. 4 is a schematic diagram of a participant, a monitor, and a camera after the method illustrated in FIG. 3 is implemented;
FIG. 5 is a schematic diagram of another conference site environment;
FIG. 6 is a flowchart of still another method for controlling a video device according to an embodiment of the present invention;
FIG. 7 is a schematic diagram of a participant, a monitor, and a camera after the method illustrated in FIG. 6 is implemented;
FIG. 8 is another schematic diagram of a participant, a monitor, and a camera after the method illustrated in FIG. 6 is implemented;
FIG. 9 is a flowchart of still another method for controlling a video device according to an embodiment of the present invention;
FIG. 10 is a schematic diagram of still another conference site environment;
FIG. 11 is a flowchart of still another method for controlling a video device according to an embodiment of the present invention;
FIG. 12 is a schematic structural diagram of an apparatus for controlling a video device according to an embodiment of the present invention; and
FIG. 13 to FIG. 16 are schematic structural diagrams of several video systems according to an embodiment of the present invention.

### DETAILED DESCRIPTION

The embodiments of the present provides a technical solution for adjusting directions of a camera and a monitor when a position of a participant changes, which ensures that participants are "face to face". This flexibly meets multiple attending modes of the participants without changing conference site environment.

For the purposes of referencing and clarification, the technical nouns, acronyms, or abbreviations used in this document are summarized as follows:
WEB, web, that is, mesh organization of a Web page;
WiFi, Wireless Fidelity, that is, wireless fidelity;
C/S, Client/Server, that is, client/server;
MIC, Microphone, microphone;
IP, Internet Protocol, Internet Protocol.

The following clearly and completely describes the technical solutions according to the embodiments of the present invention with reference to the accompanying drawings in the embodiments of the present invention. Apparently, the embodiments in the following description are merely a part rather than all of the embodiments of the present invention. All other embodiments obtained by persons skilled in the art based on the embodiments of the present invention without creative efforts shall fall within the protection scope of the present invention.

The method for controlling a video device according to an embodiment of the present invention applies to a video device whose camera and monitor are "linked", that is, the positions of the camera and monitor are relatively fixed, face a same direction, are connected to a moving mechanism, and are driven by the moving mechanism to move (shift or rotate).

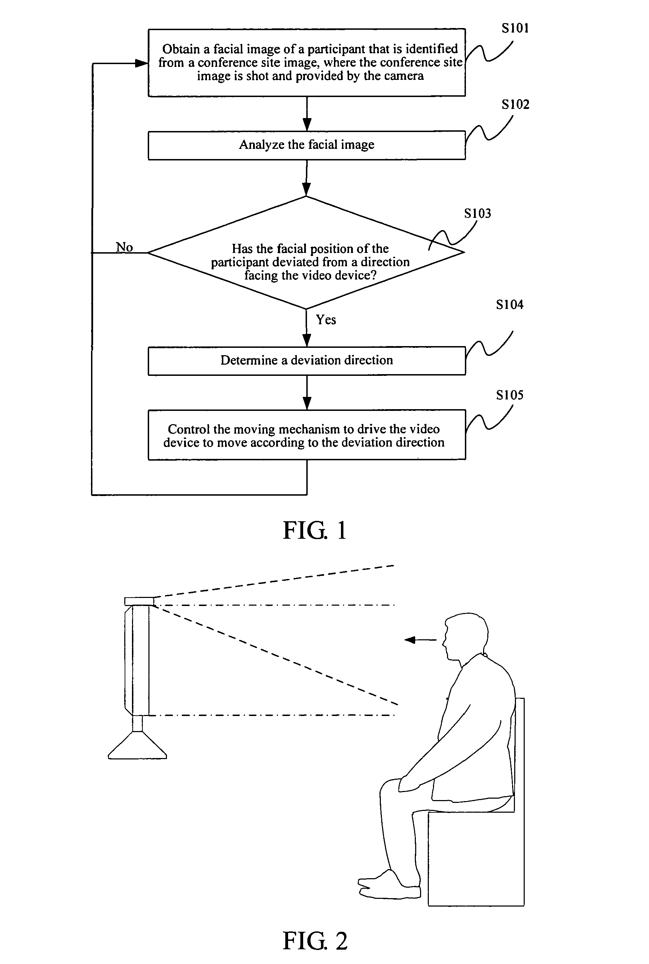

FIG. 1 is a flowchart of the method for controlling a video device, including the following steps:
S101. Obtain a facial image of a participant that is identified from a conference site image, where the conference site image is shot and provided by the camera.

The specific process is as follows: first a conference site image is shot by a camera, and then a facial image of a participant is identified from the conference site image by using a face identification technique.

S102. Analyze the facial image.

S103. Judge, with reference to an analysis result, whether the facial position of the participant has deviated from directions of facing the monitor and the camera. If yes, go to step S104; otherwise, return to step S101.

S104. Determine a deviation direction.

Multiple manners can be used to implement the following: analyzing the facial image, judging, with reference to the analysis result, whether a facial position of the participant has deviated from directions of facing the monitor and the camera, and determining a deviation distance. The following briefly describes these manners.

One manner is to compare images, that is: compare the facial image obtained in step S101 1 with a pre-stored reference facial image, where the reference facial image is a facial image facing a direction of the video device. Therefore, if a comparison result shows that the obtained facial image is inconsistent with the position of the reference facial image, the facial position of the participant has deviated from a direction of facing the video device.

The other manner is to compare both images and sound, that is: compare the facial image obtained in step S101 with a pre-stored reference facial image by following the same process as the preceding manner, and collect conference site audio data on the two sides in front of the participant (that is, two sides in front of the video device), and compare the audio data. If conference site volume values on the two sides are equal or almost equal, the facial position of the participant faces the direction of the video device; if the conference site volume values on the two sides are unequal (A threshold may be set; and when a volume difference exceeds the threshold, it indicates that the volume is obviously unequal), the facial position of the participant has deviated from the direction of facing the video device.

It may be understood that other manners may be used to implement the following: analyzing the facial image, judging, with reference to the analysis result, whether a facial position of the participant has deviated from directions of facing the monitor and the camera, and determining a deviation distance. The implementation of these manners does not limit the scope of the present invention.

The reference facial image is an image when a facial position of a participant faces a video device. Before step S101 is performed, the reference facial image may be shot by the camera when the participant sits uprightly (or stands) in front of the video device, with his face facing the camera, and then stored in a central processing unit of the video system or in a separate storage unit. This process may be called a "learning" process. Assuredly, the reference facial image may be an image of the participant which is collected during an earlier video conference when the facial position of the participant faces the video device.

S105. Control the moving mechanism to drive the video device to move to a position of facing the facial position of the participant according to the deviation direction.

After it is determined that the facial position of the participant has deviated from a direction of facing the video device, at least the following two manners may be used to control the moving mechanism to drive the video device to move to a position of facing the facial position of the participant:
One control manner is to determine an adjustment direction according to a deviation direction. For example, if some major characteristics of the facial image (such as eyes, nose, or mouth) obtained in step S101 are on the left side of the corresponding characteristics of the reference facial image, it is determined that the participant has moved leftward, and therefore the adjustment direction of the video device is "rightward". In this case, the moving mechanism may be controlled to drive the video device to move rightward at a preset distance (step); after each move, a facial image identified from a conference site image may be obtained and then compared with the reference facial image. According to the comparison result, it is judged whether the facial image and the reference facial image coincide (or are consistent). If yes, the operation of the moving mechanism may be stopped; otherwise, the moving mechanism may be continuously controlled to drive the video device to move rightward until the facial image and the reference facial image coincide (or are consistent).

The other control manner is to further determine an adjustment distance, and then control the moving mechanism to move the video device to move at the adjustment distance along the adjustment direction. Specifically, the adjustment distance and move may be determined in, but not limited to, the following way:
A target adjustment position is estimated according to an empirical value of the system, an adjustment distance is estimated based on the target adjustment position, and then the moving mechanism is controlled to drive the video device to move. When the video device arrives at the target adjustment position, an image of the participant is shot by a camera and compared with the facial position image of the participant that is shot in advance; then, the comparison result can be used to fine control the moving mechanism so that the image of the participant shot by the camera basically coincides with or has a consistent direction with the pre-stored reference facial image.

It may be seen that, in this embodiment of the present invention, the monitor and the camera are linked together. In this case, in conjunction with a face identification technique, it is be judged whether a position of a participant has changed; and after it is determined that a facial position of a participant has deviated from a monitor and a camera, the monitor and the camera may be controlled to move to a position of facing the participant. At least the following functions are provided:
1. Because the monitor and the camera are "linked", when a participant faces a monitor, a camera may shot a front image of a participant. That is, the participants are "face to face horizontally" while it is ensured that the camera can shot a front image;
2. In this embodiment, when an attending mode of a participant has changed, a monitor may adjust its position according to the attending mode of the participant without changing a conference site environment. That is, in this embodiment, multiple attending modes can be accommodated without changing the conference site environment.

Generally, a position of a participant may change in a vertical direction, a horizontal direction, or both vertical and horizontal directions. To enable persons skilled in the art to understand the embodiments of the present invention more clearly, the following provides several embodiments relating to the three types of position change.

### Embodiment 1

When a conference begins, a participant sits in front of a monitor and a camera, with his facial position facing the front of the monitor and the camera, as shown in FIG. 2. In the figure, dot-dashed lines indicate a front range of the monitor, and dashed lines indicate a shooting range of the camera. Then, the participant changes from sitting to standing and remains unchanged in a horizontal direction.

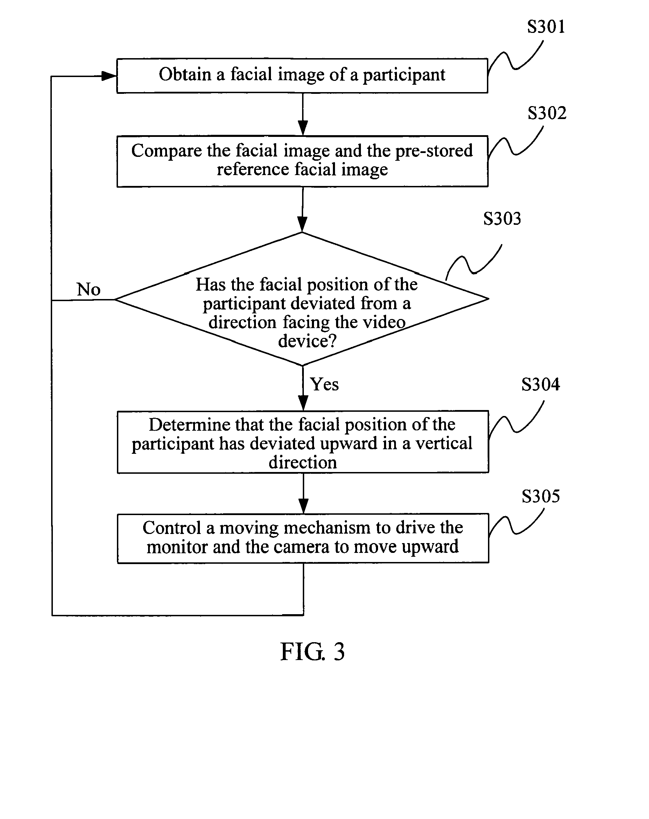

During this process, a flowchart of the control method according to this embodiment of the present invention is shown in FIG. 3, including the following steps:

S301. Obtain a facial image of a participant.

A conference site image is obtained by using a camera, and the facial image of the participant is identified from the conference site image by using a face search engine.

S302-S303. Compare the facial image and a pre-stored reference facial image, and judge, according to the comparison result, whether the facial position of the participant has deviated from directions of facing the monitor and the camera. If yes, go to step S304; otherwise, return to step S301.

S304. Determine that the facial position of the participant has deviated upward in a vertical direction.

The specific process may be as follows: positions of the major characteristics of the two images (such as eyes, nose, or mouth) are judged. If the positions are the same, it indicates that the position of the participant has not changed; if the positions are different, it indicates that the facial position of the participant has deviated from directions of facing the monitor and the camera. In this embodiment, if the position of the obtained facial image of the participant is higher than the position of the pre-stored reference facial image, it is determined that the participant has changed from sitting to standing. This indicates that the facial position of the participant has moved from a lower position to a higher position in a vertical direction and remains unchanged in a horizontal direction.

S305. Control a moving mechanism to drive the monitor and the camera to move upward, and then return to step S301. The moving mechanism is controlled, according to the position change of the participant determined in real time, to drive the monitor and the camera to move, and a moving direction may be dynamically adjusted according to the determined position of the participant. The moving mechanism includes at least a vertical lifting mechanism. The vertical lifting mechanism may implement lifting by using a screw rod or gear, which belongs to the prior art and therefore not described here.

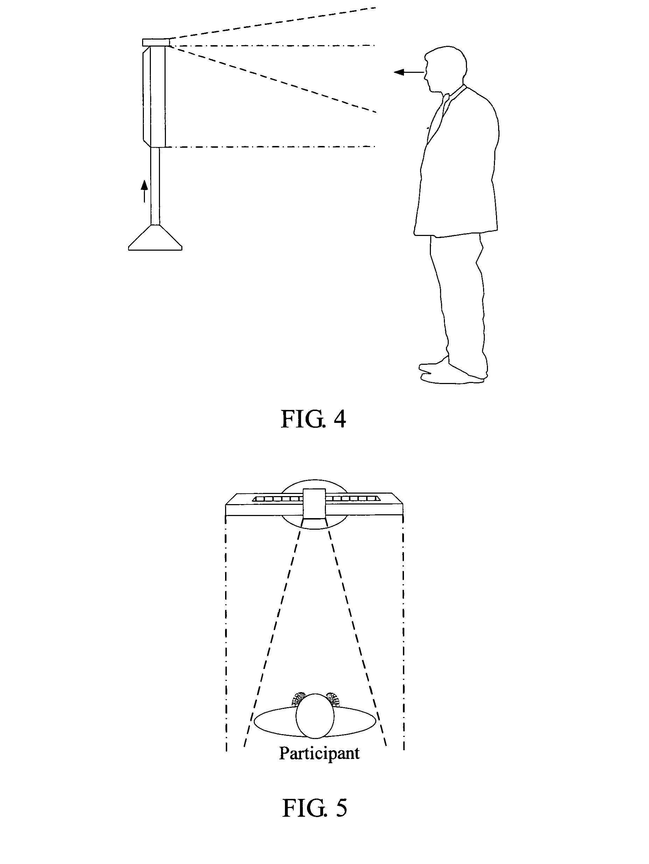

During the implementation of this embodiment of the present invention, the position of the participant may change, so step S301-step S303 need to be repeated, step S304 and step S305 need to be performed when necessary, and even a next cycle (step S301- step S305) needs to be performed. After one or multiple cycles are performed, the facial position of the participant faces the monitor and the camera, as shown in FIG. 4.

In an embodiment of the present invention, if the participant has changed from standing to sitting, the basic idea is similar to that of this embodiment, and the difference is as follows: after it is determined that the facial position of the participant has deviated downward in a vertical direction, the moving mechanism is controlled to drive the monitor and the camera to move downward.

It should be noted that if a participant switches between only two attending modes, for example, the participant stands or sits, the deviation distances of the facial positions when the participant sits and stands may be pre-determined. In this way, if it is determined later that the facial position of the participant has changed, the monitor and the camera may be controlled to move at the deviation distances along a deviation direction, which may be easily and quickly implemented.

### Embodiment 2

When a conference begins, a participant sits (or stands) in front of a monitor and a camera, with his facial position facing the front of the monitor and the camera, as shown in FIG. 5. Then, the participant moves leftward to another position in horizontal direction and remains unchanged in a vertical direction.

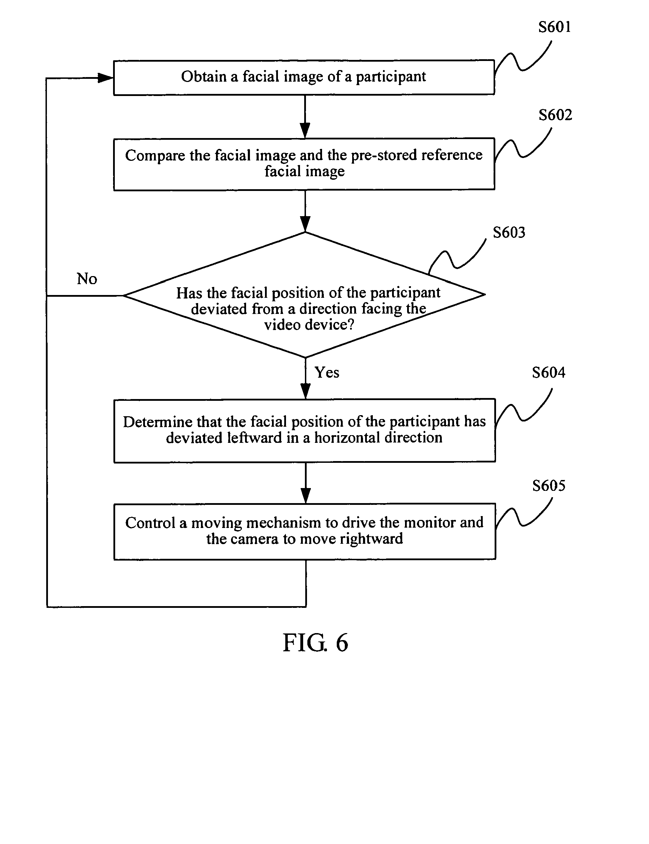

During this process, a flowchart of the control method according to this embodiment of the present is shown in FIG. 6, including the following steps:
S601. Obtain a facial image of a participant.

This step is basically the same as step S301 described earlier.

S602-S603. Compare the facial image and the pre-stored reference facial image, and judge, according to the comparison result, whether the facial position of the participant has deviated from directions of facing the monitor and the camera. If yes, go to step S604; otherwise, return to step S601.

S604. Determine that the facial position of the participant has deviated leftward in a horizontal direction.

The specific process may be as follows: positions of the major characteristics of the two images (such as eyes, nose, or mouth) are judged. If the positions are the same, it indicates that the position of the participant has not changed; if the positions are different, it indicates that the facial position of the participant has deviated from directions of facing the monitor and the camera. In this embodiment, if the participant moves leftward (from the angle of the participant) to stand at another position, it indicates that the facial position of the participant moves only in a horizontal direction and remains unchanged in a vertical direction. That is, the moving direction of the participant in horizontal orientation may be determined by using the preceding locating method.

S605. Control a moving mechanism to drive the monitor and the camera to move rightward, and then return to step S601. The moving mechanism includes a horizontal rotating mechanism, where the horizontal rotating mechanism may implement horizontal rotation of the monitor and the camera by using a connecting rod, cam, or gear, which belongs to the prior art and therefore is not described here.

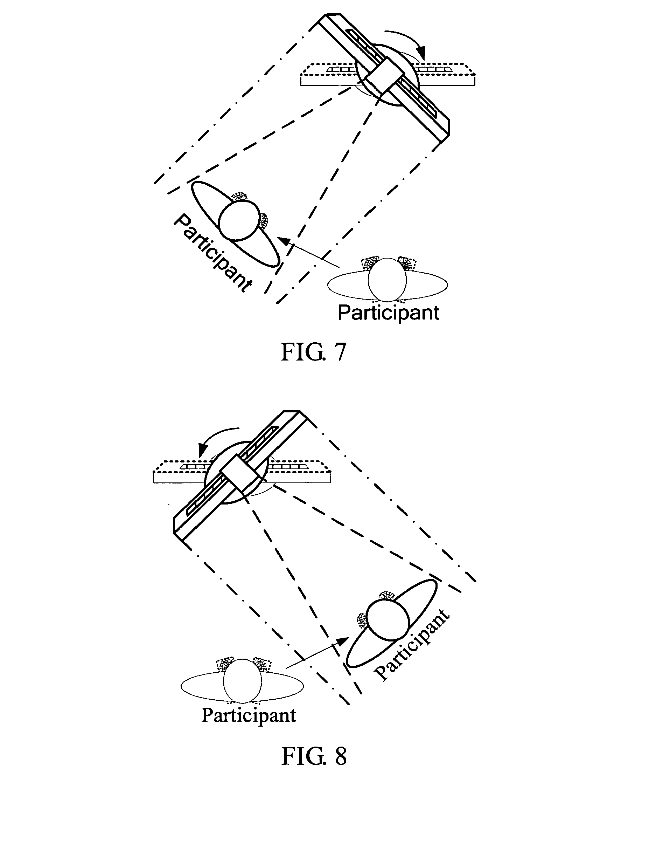

After the monitor and the camera are driven to rotate rightward, the position of the participant may have changed. Therefore, the step S601- step S603 may need to be repeated, step S604 and step S605 need to be performed when necessary, and even a next cycle (step S601- step S605) needs to be performed. After one or multiple cycles are performed, the facial position of the participant faces the monitor and the camera, as shown in FIG. 7, where a dashed line indicates an original position, and a solid line indicates a current position. It should be noted that in other embodiments, the monitor and the camera shift horizontally, so the horizontal shifting mechanism needs to replace a horizontal rotating mechanism, where the horizontal shifting mechanism may implement horizontal shifting of the monitor and the camera by using a sliding rail mechanism, which belongs to the prior art and therefore is not described here.

Assuredly, for the situation in which the participant moves leftward to another position in a horizontal direction and remains unchanged in a vertical direction, the basic idea is basically the same as that of this embodiment, and the differences are as follows: it is determined in step S604 that the facial position of the participant has moved rightward in a horizontal direction, and, in step S605, the moving mechanism is controlled to move the monitor and the camera to rotate leftward. After one or multiple cycles are performed, the facial position of the participant faces the monitor and the camera, as shown in FIG. 8, where a dashed line indicates an original position, and a solid line indicates a current position.

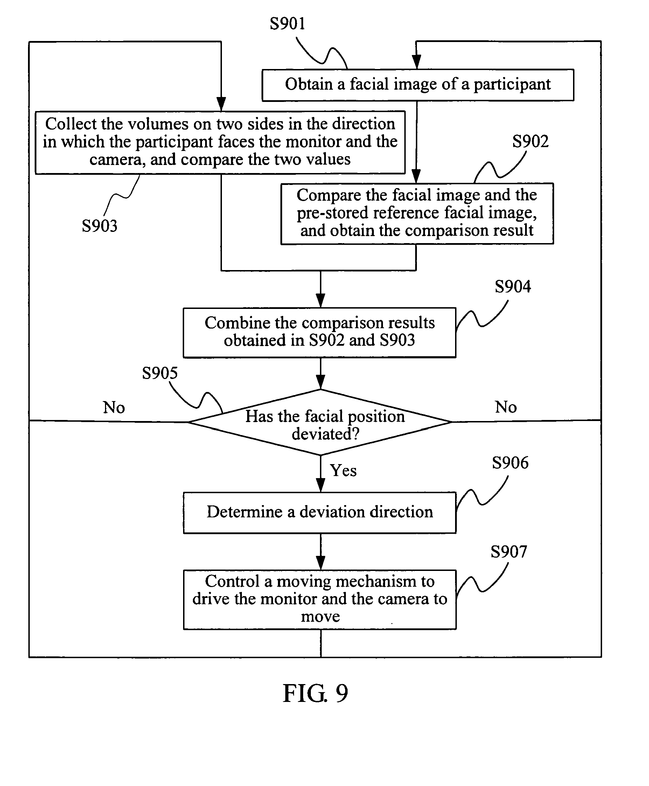

In the same scenario, face identification and tracking techniques and a sound positioning technique may be combined to judge whether a facial position of a participant has deviated from directions of facing a monitor and a camera and a deviation direction. The specific process is shown in FIG. 9, including the following steps:
S901. Obtain a facial image of a participant.

This step is basically the same as step S601 described earlier.

S902. Compare the facial image and the pre-stored reference facial image, obtain the comparison result, and then go to step S904.

S903. Collect the audio data (specifically volume) on two sides in the direction in which the participant faces the monitor and the camera, compare the two values, and then go to step S904.

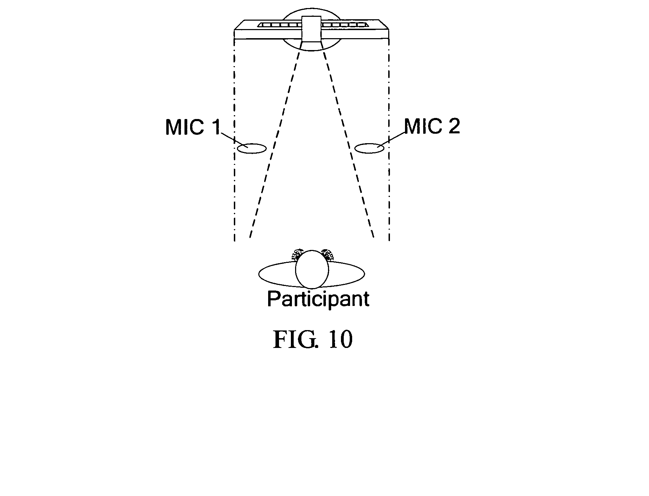

In this embodiment, one MIC is arranged, in front of the participant in the conference site, on each of the two sides (MIC 1 and MIC 2) in the direction in which the participant faces the monitor and the camera, as shown in FIG. 10.

S904-S905: Make an analysis of the comparison results obtained in step S902 and step S903 to judge whether the facial position has deviated. If yes, go to step S906; otherwise, go to step S901 and step S903.

Generally, if the participant has moved leftward or rightward (with reference to directions of facing the monitor and the camera), the volume collected by the two MICs may change. That is, the moving orientation of the participant may be initially estimated, that is, leftward or rightward, by using the MICs. If the volume collected by MIC 2 is higher than the volume collected by MIC 1 and the difference exceeds a preset threshold (If the absolute value of the difference between the volume picked up by the two MICs does not exceed the threshold, it indicates that the horizontal position of the participant remains unchanged), it indicates that the participant has moved rightward in a horizontal direction; if the volume collected by MIC 2 is lower than the volume collected by MIC 1 and the difference exceeds a preset threshold, it indicates that the participant has moved leftward in a horizontal direction.

However, noises, which are not the sound made by the participant, may exist at different positions of the conference site and therefore affect the judgment result. Therefore, in this embodiment, the judgment result obtained by using the sound positioning technique only serves as a reference, and the judgment result obtained by comparing images still serve as a major criterion.

S906. Determine a deviation direction.

In this embodiment, it is determined that the deviation direction is leftward in a horizontal direction.

S907. Control a moving mechanism to drive the monitor and the camera to move to face the facial position of the participant.

Similar to the preceding embodiments, one ore more cycles (step S901- step S907) may need to be performed in this embodiment so that the monitor and the camera faces the facial position of the participant.

In this embodiment, after the volume data is collected by using a sound positioning technique and compared, the judgment result obtained by the face identification and tracking techniques is verified and confirmed according to the comparison result, thereby further increasing the accuracy of judgment.

### Embodiment 3

When a conference begins, a participant sits (or stands) in front of a monitor and a camera, with his facial position facing the front of the monitor and the camera. Then, the participant moves in a horizontal direction to another position of the conference site, and a change occurs in a vertical direction (for example, changing from sitting to standing).

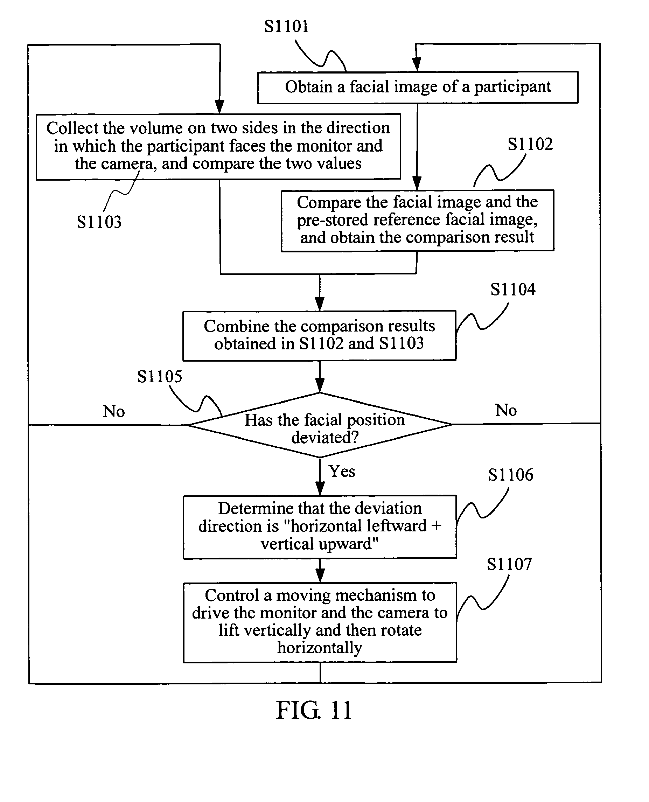

During this process, a flowchart of the control method according to this embodiment of the present invention is shown in FIG. 11, including the following steps:
S1101-S1105: Basically the same as step S901- step S905 in the preceding embodiment.

In step S1105, the comprehensive analysis is as follows: if one MIC is only arranged, in front of the participant in the conference site, on each of the two sides in the direction in which the participant faces the monitor and the camera, it can be determined that deviation direction is either leftward or rightward according to the result of volume comparison. In this embodiment, it is determined that the deviation direction is horizontal leftward according to the comparison result obtained through sound positioning. In addition, it is determined that the deviation direction is "horizontal leftward + vertical upward" according to the comparison result obtained through facial image comparison.

S1106. Determine that the deviation direction is "horizontal leftward + vertical upward".

Specifically, if the position of the participant changes, the volume collected by the two MICs may also change. That is, if the volume collected by MIC 2 is lower than the volume collected by MIC 1 and the difference exceeds a preset threshold (If the absolute value of the difference between the volume picked by the two MICs does not exceed the threshold, it indicates that the horizontal position of the participant remains unchanged), it indicates that the participant has moved leftward in a horizontal direction. In addition, in this embodiment, if the position of the obtained facial image of the participant is higher than the position of the pre-stored reference facial image, it indicates that the facial position of the participant has moved from a lower position to a higher position in a vertical direction. This means that the participant has moved upward in a vertical direction. Therefore, finally, a determined deviation direction is "horizontal leftward + vertical upward" (that is, the deviation direction is upper-left and forms a preset angle with a horizontal direction).

S1107: Control a moving mechanism to drive the monitor and the camera to move to face the facial position of the participant.

The moving of the monitor and the camera includes two processes: vertical shifting process + horizontal shifting process. The vertical shifting process may be completed before the horizontal shifting process; alternatively, the horizontal shifting process may be completed before the vertical shifting process.

It should be noted that the sound positioning method described in the preceding embodiments, in which an audio unit (that is, an MIC) for collecting volume is arranged in a conference site, and a comparison is made on volume to judge whether a facial position of a participant has deviated from directions of facing a monitor and a camera and a deviation direction, is only used in a certain application scenario in this document, that is, when the participant moves leftward or rightward from the center of the conference site (for example, the position shown in FIG. 2) to another position. In other application scenarios, for example, when the participant moves from a position away from the center of the conference site (for example, the position indicated by the solid line in FIG. 7), the sound positioning method may be shielded or disabled.

It may be seen that in a method for controlling a video device according to this embodiment, the monitor and the camera are linked and therefore, when driven by a moving mechanism, may move simultaneously, thereby making it easy to control the monitor and the camera. When a participant faces the monitor and the camera, a camera can shot a front image of the participant; that is, the participants are "face to face horizontally" while it is ensured that the camera can shot a front image, thereby providing a good attending experience for the participants. In addition, the positions of the monitor and the camera can be adjusted according to a change to the attending mode of the participant, thereby providing a higher degree of freedom for the participant; and multiple attending modes can be accommodated without changing the conference site environment.

It should be noted that the method according to this embodiment may be triggered according to an instruction given by a participant. That is, this method does not need to be executed during the attending process of the participant; it may be executed only after a triggering instruction is received from the participant. Therefore, the participant may trigger the execution of this method when he needs to change his position in the conference site (that is, to change the attending mode), or disable or does not trigger the execution of this method when he does not needs to change his position in the conference site. The triggering of the method implemented by sending an instruction through a certain button on a camera or monitor arranged in the conference site, or by sending a triggering control signal through a hand-held electronic device (for example, a remote-controller).

In addition, for the scenario in which a participant has deviated much from the positions of the monitor and the camera before the conference begins, in another embodiment of the present invention, the moving mechanism may be directly controlled, according to the instruction given by the participant, to move or rotate the monitor and the camera, and the process of the preceding method embodiments may be executed after triggering information is received. That is, the participant may "roughly adjust" the monitor and the camera in advance, and then "fine adjust" them by using the method according to this embodiment.

For the preceding method, an embodiment of the present invention further provides an apparatus for controlling a video device and a video system having the apparatus for controlling a video device.

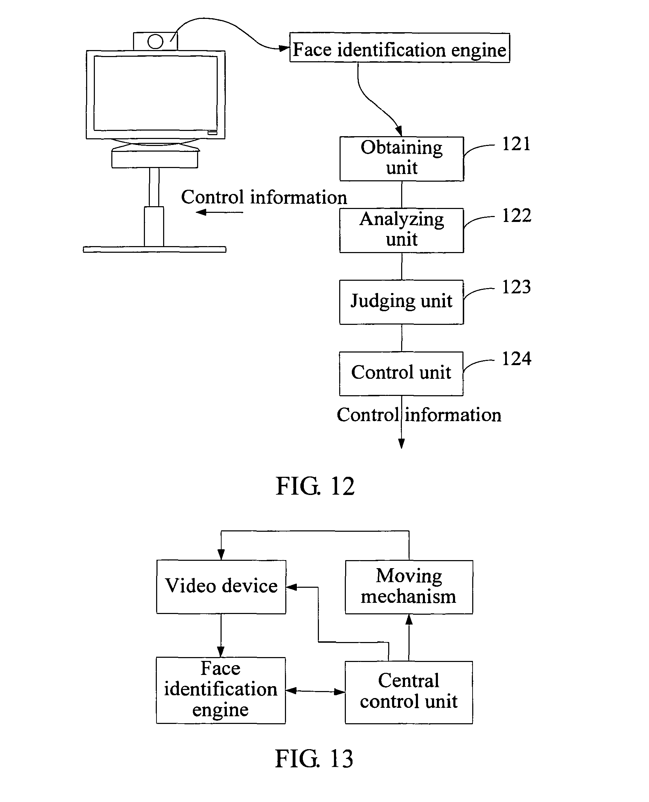

The apparatus for controlling a video device is configured to execute processes related to the preceding method for controlling a video device. FIG. 12 illustrates a logical structure of the apparatus, where the video device includes a monitor and a camera, and the monitor and the camera are relatively fixed, face a same direction, and are connected to a moving mechanism, and, as shown in the figure, the control apparatus includes: an obtaining unit 121, an analyzing unit 122, a judging unit 123, and a control unit 124, where:
the obtaining unit is configured to obtain a facial image of a participant that is identified from a conference site image, where the conference site image is shot and provided by the camera;
the analyzing unit 122 is configured to analyze the facial image;
the judging unit 123 is configured to judge whether the facial position of the participant has deviated from directions of facing the monitor and the camera with reference to an analysis result of the analyzing unit, and, after determining that the facial position of the participant has deviated from directions of facing the monitor and the camera, determine a deviation direction; and
the control unit 124 is configured to control the moving mechanism to drive the monitor and the camera to move to a position of facing the facial position of the participant according to the deviation direction.

This apparatus is mainly configured to implement the preceding method for controlling a video device. Therefore, for the operating process of the apparatus, reference can be made to the description about the preceding method.

Specifically, the video control apparatus is a central control unit (or a central controller) of a video system or is a part of the central control unit. It connects to an external camera, a face search engine, and moving architecture through some pins or lines. A connection structure is shown in FIG. 13, and it forms a video system or a part of the video system.

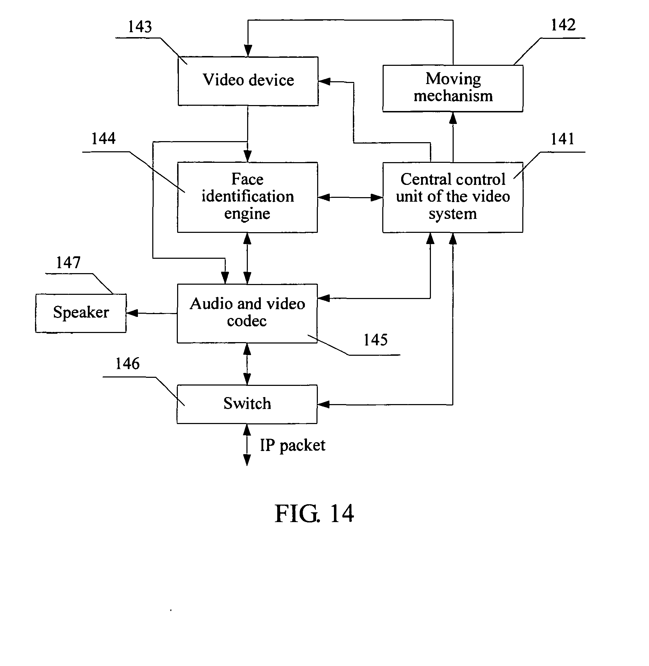

FIG. 14 is a schematic structural diagram of a video system according to an embodiment of the present invention. As shown in the figure, the video system includes a central control unit 141, a moving mechanism 142, a video device (a camera and a monitor) 143, a face identification engine 144, a audio and video codec 145, a switch 146, and a speaker 147.

In the camera and monitor 143, the camera is a video input source of the system, and the monitor is an output video display device of the system; their positions are relatively fixed; and they, when driven by the moving mechanism 142, are linked together to lift vertically and rotate horizontally (or move).

The core of the face identification engine 144 is face identification and tracking algorithms. The face identification and tracking algorithms are configured to collect video data (data of a conference site) of the camera in real time, invoke the face identification and tracking algorithms to analyze a facial position, and give a feedback to the central control unit 141.

The moving mechanism 142 includes a vertical lifting mechanism and a horizontal rotating or horizontal shifting mechanism and is electronically driven. Under the scheduling (that is, control) of the central control unit, the moving mechanism controls the camera and monitor 143, in manners such as driving a motor, to lift vertically and rotate horizontally or shift horizontally, or to lift vertically, shift horizontally, and rotate horizontally. The moving mechanism is an executor of the system.

In one aspect, the audio and video codec 145 compresses and encodes the audio and video data at a local end of the conference site (that is, the end where the system is located), packs the data into an IP packet, and transmits the packet to a remote end. In another aspect, it receives an IP packet from a remote end of the conference site, decompresses the IP packet, decodes the video data, provides the decoded video data for a monitor at a local end for displaying, and provides the decoded audio data for the speaker 147 at a local end for playing. It is a data converter of the system.

The speaker 147 is an output device. It receives and plays the audio data outputted by the audio and video codec 145. It is an outputter of the system.

The switch 146 is configured for protocol parsing and control. It is a transmitter of the system.

The operating process is as follows:
The camera shots a conference site image and provides it for the face identification engine 144; after performing face identification, the face identification engine 144 provides the identified facial image for the central control unit 141; the central control unit 141 analyzes the facial image, and, after judging, with reference to the analysis result, that the facial position of the participant has deviated from directions of facing the camera and monitor 143, determines a deviation direction; then, the moving mechanism is controlled to drive the camera and monitor 143 to move to a position of facing the facial position of the participant according to the deviation direction.

The specific image analysis process of the central control unit 141 is as follows: a pre-stored reference facial image is invoked; the facial image provided by the face identification engine 144 is compared with the reference facial image; and then whether the facial position has changed is judged according to the comparison result. The reference facial image is an image when a facial position of a participant faces a video device. Before a conference begins, the reference facial image can be shot by the camera when the participant sits uprightly (or stands) in front of the video device, with his face facing the camera, and then stored in the central control unit 141 or stored seperately in a storage unit. This process is a "learning" process of the system. Assuredly, the reference facial image may be an image of the participant collected during an earlier video conference when the facial position of the participant faces the video device.

The central control unit 141 may send a control signal directly through a pin or a cable to control the moving mechanism 142 to move; it may also send a radio control signal through a radio unit (not shown in the figure) to control the moving mechanism 142 to move.

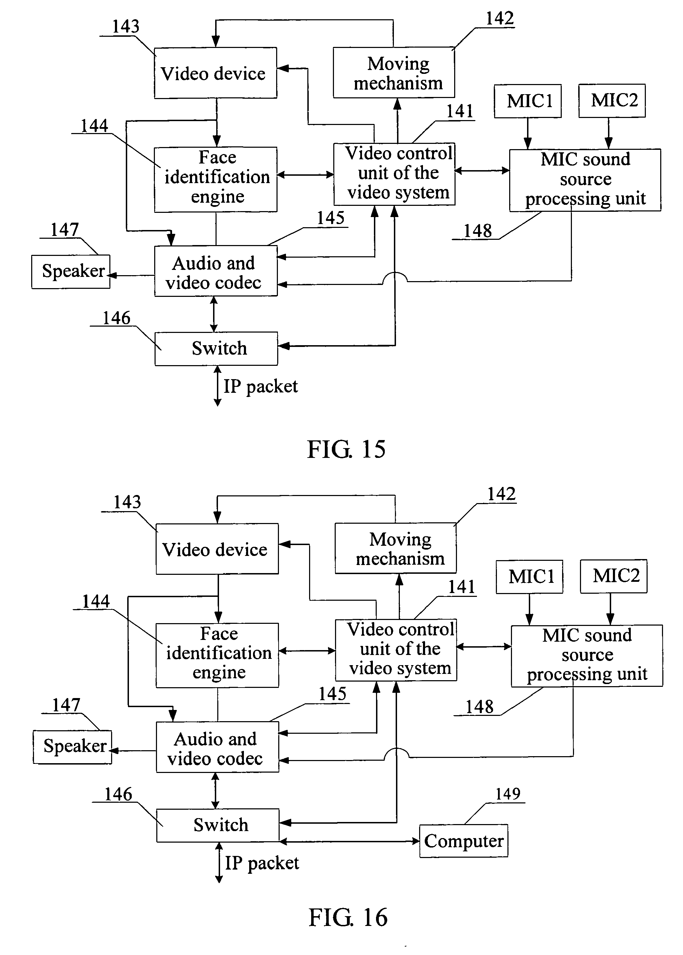

A video system according to certain video systems may further include a video device that is arranged on two sides in the direction in which the participant faces the monitor and the camera. For example, as shown in FIG. 15, the video system further includes MIC 1, MIC 2, and an MIC sound source processing unit for processing audio data, where the MIC 1 and MIC 2 are respectively located, in front of the participant, on each of the two sides in the direction in which the participant faces the monitor and the camera.

As sound source collectors, the MIC 1 and the MIC 2 are configured to perform an acoustoelectric conversion, collect sound in a conference site, and send it to the MIC sound source processing unit 148. They are inputters of the system.

The MIC sound source processing unit 148 is configured to perform preprocessing such as amplification, filtering, and quantization on the audio data (volume) collected by the MIC 1 and MIC 2. After completing the processing, in one aspect, it provides the video data for the audio and video codec 145 for decoding; in another aspect, it makes a comparison on the volume picked up (that is, collected) by the two MICs, estimate the MIC toward which the facial position of the participant inclines, and transmits the estimation result to the central control unit 141, so that the central control unit 141 can roughly judge whether facial position of the participant has deviated from a direction of the camera and monitor 143 and the deviation direction. It is an analyzer of the system.

In this video system, the central control unit 141 makes a final judgment by combining the information provided by the face identification engine 144 and the information provided by the MIC sound source processing unit 148. It should be noted that noises, which are not the sound made by the participant, may exist at different positions of the conference site and therefore affect the judgment result. Therefore, in this video system, the information provided by the MIC sound source processing unit 148 only serves as reference, and the information provided by the face identification engine 144 serves as a major criterion; that is, if the judgment result obtained according to the information provided by the face identification engine 148 and the judgment result obtained according to the information provided by the MIC sound source processing unit 148 are inconsistent, the judgment result obtained according to the information provided by the face identification engine 144 prevails.

A video system according to another embodiment may further include a computer 149, as shown in FIG. 16, where the computer 149 is configured to access a web page of the system by using a C/S mode, set and control a corresponding device in the system, and monitor the running status of the system. That is, before a conference begins, a participant may pre-store, through the computer 149, a reference facial image shot in advance so that it serves as reference for a subsequent image comparison; and parameters such as brightness and image scale may also be set for related devices (a monitor and a camera) through the computer 149. In addition, the moving mechanism 142 may also be controlled through the computer 149 to drive the camera and monitor 143 to move so as to "roughly adjust" the position of the camera and monitor 143. For description about "rough adjustment", refer to the earlier section about methods.

It should be noted that persons skilled in the art should understand that in the preceding video systems, the switch 146 and the speaker 147, and that, in some scenarios (for example, near field communications and/or a headset mode), the switch 145 and/or the speaker 147 may be not needed.

It should be further noted that the judgment and control operations of the face identification engine 144 and the central control unit 141 may be automatically performed after the system starts, or may be controlled by a participant. For example, if the participant needs to change an attending mode (for example, change from sitting to standing), he, after standing up, may send a control triggering signal through an electronic device (for example, a remote-controller) to trigger the preceding units to operate. Assuredly, the participant may also send a control disabling signal through an electronic device to stop the preceding units from operating. This avoids a waste of electricity caused by operating of the preceding units while the attending mode does not need to be changed.

All embodiments describe the present invention by using the progressive method. Each embodiment describes only the difference from other embodiments. For similar parts among all embodiments, reference may be made to relevant parts. The apparatus disclosed in the embodiment is related to the method disclosed in the embodiments, and is therefore outlined. For an associated part, reference may be made to the description in the method embodiments.

In should be understood by persons skilled in the art that information, signals and messages may be expressed by any one of the various techniques and technologies. For example, the message and the information which are mentioned in the above illustration may be denoted by voltages, currents, electromagnetic waves, magnetic fields or particles, optical fields, or any combination thereof.

A person skilled in the art may further notice that the units, algorithms, and steps in each example described in the public embodiments of the present invention may be implemented by electronic hardware, computer software, or combination of both. To clearly describe the changeability of the hardware and software, the composition and steps of each example are generally described according to functions in the preceding description. Whether the functions are executed by hardware or software depends on particular applications and design constraint conditions of the technical solutions. Persons skilled in the art may use different methods to implement the described functions for every particular application, but it should not be considered that the implementation goes beyond the scope of the present invention.

Persons skilled in the art should understand that all or a part of the processes of the method according to the embodiments of the present invention may be implemented by a program instructing relevant hardware. The program may be stored in a computer readable storage medium. When the program is run, the processes of the method according to the embodiments of the present invention are performed. The storage medium may be a magnetic disk, an optical disk, a Read-Only Memory (Read-Only Memory, ROM), a Random Access Memory (Read-Only Memory, RAM), and the like.

The preceding description disclosed in the embodiments allows a person skilled in the art to implement or use the present invention. Multiple modifications to these embodiments are apparent for a person skilled in the art. The general principle defined in the present invention may be implemented in other embodiments without departing from the idea or scope of the present invention. Therefore, the present invention is not to be limited to the embodiments described in the document but extends to the widest scope that complies with the principle and novelty disclosed in the document.

## Claims

1. A method for controlling a video device, wherein the video device comprises a monitor and a camera, the monitor and the camera are relatively fixed, face a same direction, and are connected to a moving mechanism, and the method comprises:
obtaining a facial image of a participant that is identified from a conference site image, where the conference site image is shot and provided by the camera;
analyzing the facial image, and determining a deviation direction, after judging, with reference to an analysis result, that a facial position of the participant has deviated from directions of facing the monitor and the camera; and
controlling the moving mechanism to drive the monitor and the camera to move to a position of facing the facial position of the participant according to the deviation direction.

2. The method for controlling a video device according to claim 1, wherein the facial image is analyzed in following steps:
invoke a pre-stored reference facial image, wherein the pre-stored reference facial image is a facial image that is shot in advance when the facial position of the participant faces the monitor and the camera; and
compare an obtained facial image with the reference facial image, and judge whether the spatial position of the obtained facial image has changed as compared to the reference facial image.

3. The method for controlling a video device according to claim 2, wherein the determining that a facial position of a participant has deviated from directions of facing the monitor and camera comprises:
collecting on the two sides of the monitor and the camera, voice volume of the participant, and making a comparison between them to obtain a comparison result; and
making an analysis of the analysis result and the comparison result, and, if both the analysis result and the comparison result indicate that the facial position of the participant has deviated from directions of facing the monitor and the camera, determining that the facial position of the participant has deviated from directions of facing the monitor and the camera.

4. An apparatus for controlling a video device, wherein the video device comprises a monitor and a camera, the monitor and the camera are relatively fixed, face a same direction, and are connected to a moving mechanism, and the apparatus for controlling a video device comprises:
an obtaining unit, configured to obtain a facial image of a participant that is identified from a conference site image, wherein the conference site image is shot and provided by the camera;
an analyzing unit, configured to analyze the facial image;
a judging unit, configured to judge, with reference to an analysis result of the analyzing unit, whether a facial position of the participant has deviated from directions of facing the monitor and the camera, and, after determining that the facial position of the participant has deviated from directions of facing the monitor and the camera, determine a deviation direction; and
a control unit, configured to control the moving mechanism to drive the monitor and the camera to move to a position of facing the facial position of the participant according to the deviation direction.

5. The apparatus for controlling a video device according to claim 4, wherein the analyzing unit comprises:
an invoking unit, configured to invoke a pre-stored reference facial image, and the pre-stored reference facial image is a facial image that is shot in advance when the facial position of the participant faces the monitor and the camera; and
a comparing unit, configured to compare an obtained facial image with the reference facial image, and judge whether the spatial position of the obtained facial image has changed as compared to the reference facial image.

6. The apparatus for controlling a video device according to claim 5, wherein the judging unit comprises:
a collecting module, configured to collect voice volume of the participant on the two sides of the monitor and the camera, and making a comparison between them to obtain a comparison result; and
a processing module, configured to make an analysis of the analysis result and the comparison result, and, if both the analysis result and the comparison result indicate that the facial position of the participant has deviated from directions of facing the monitor and the camera, determine that the facial position of the participant has deviated from directions of facing the monitor and the camera.

7. A video system, comprising a video device and a central control unit, wherein the video device comprises a monitor and a camera, the monitor and the camera are relatively fixed, face a same direction, and are connected to a moving mechanism, and the system further comprises:
a face identification engine that obtains a conference site image provided by the camera and identifies a facial image of a participant; and
the central control unit is configured to obtain the facial image from the face identification engine, analyze the facial image, determine a deviation direction after judging, with reference to an analysis result, that a facial position of the participant has deviated from directions of facing the monitor and the camera, and control the moving mechanism to drive the monitor and the camera to move to a position of facing the facial position of the participant according to the deviation direction.

8. The video system according to claim 7, wherein the camera is fixedly arranged above the the monitor.

9. The video system according to claim 7, further comprising a first audio device and a second audio device that are arranged in a conference site and on the two sides in a direction of facing a monitor and are configured to collect a conference site volume.

10. The video system according to claim 7, wherein the moving mechanism is electronically driven and comprises any one of a vertical lifting mechanism, a horizontal rotating mechanism, and a horizontal shifting mechanism.
